(19) Europäisches Patentamt
European Patent Office
Office européen des brevets

(11) **EP 1 739 779 B1**

(12) **EUROPÄISCHE PATENTSCHRIFT**

(45) Veröffentlichungstag und Bekanntmachung des Hinweises auf die Patenterteilung:
**21.11.2007 Patentblatt 2007/47**

(51) Int Cl.:
*H01M 8/06* *(2006.01)*     *H01M 8/04* *(2006.01)*
*F23D 14/02* *(2006.01)*     *F23D 14/62* *(2006.01)*

(21) Anmeldenummer: **06012825.3**

(22) Anmeldetag: **22.06.2006**

(54) **Gerät zur Bereitstellung thermischer und elektrischer Energie**

device for thermal and electrical energy generation

dispositif pour la génération d'energie thermique et electrique

(84) Benannte Vertragsstaaten:
**AT BE BG CH CY CZ DE DK EE ES FI FR GB GR HU IE IS IT LI LT LU LV MC NL PL PT RO SE SI SK TR**

(30) Priorität: **30.06.2005 DE 102005030908**

(43) Veröffentlichungstag der Anmeldung:
**03.01.2007 Patentblatt 2007/01**

(73) Patentinhaber: **Viessmann Werke GmbH & Co. KG
35107 Allendorf (DE)**

(72) Erfinder:
• **Lorenz, Christian
35108 Allendorf (DE)**
• **Hesse, Wolfgang
59969 Hallenberg (DE)**
• **Heckmann, Jens
12487 Berlin (DE)**

(74) Vertreter: **Wolf, Michael
An der Mainbrücke 16
63456 Hanau (DE)**

(56) Entgegenhaltungen:
**EP-A- 1 411 573         US-A1- 2003 096 204
US-A1- 2004 081 874**

**Beschreibung**

Die Erfindung betrifft ein Gerät zur Bereitstellung thermischer und elektrischer Energie gemäß dem Oberbegriff des Patentanspruchs 1.

Ein Gerät (Brennstoffzellensystem) zur Bereitstellung thermischer und elektrischer Energie der eingangs genannten Art ist nach der DE 101 60 463 A1 bekannt. Es umfasst Reformerkomponenten (insbesondere Reformerkatalysator und Gasreinigungsstufen) zur Umwandlung von Kohlenwasserstoffgas (insbesondere Erdgas) in Wasserstoff und weitere Reformer-Produkte und mindestes eine Brennstoffzelle (insbesondere eine sogenannte PEM-Brennstoffzelle) zur Umwandlung von Luft und des bereitgestellten Wasserstoffs in elektrische Energie. Dabei umfassen die Reformerkomponenten insbesondere einen Luftanschluss, einen Gasanschluss und einen Gasbrenner, wobei der Gasbrenner auch zur Wärmebereitstellung genutzt wird. Ferner weist der Gasbrenner, auch wenn dies in der DE 101 60 463 A1 nicht explizit offenbart ist, ein Gebläse mit einem Zufuhranschluss für Luft und Gas auf.

Zur Restwärmenutzung sind bei dem genannten Gerät die Reformerkomponenten sowie die Brennstoffzelle in einem gemeinsamen Gehäuse angeordnet. Darüber hinaus wird das Anodenrestgas dem Gasbrenner zugeführt und dort verbrannt.

Der Erfindung liegt die Aufgabe zugrunde ein Gerät der eingangs genannten Art dahingehend weiter zu bilden, dass nicht nur das Anodenrestgas, sondern auch andere Prozessgase, auf die weiter unten noch genauer eingegangen wird, sicher im System gehalten (Vermeidung von Leckagen) und darüber hinaus zur Wirkungsgradsteigerung nutzbar gemacht werden.

Diese Aufgabe ist mit einem Gerät der eingangs genannten Art durch die im Kennzeichen des Patentanspruchs 1 aufgeführten Merkmale gelöst.

Nach der Erfindung ist also vorgesehen, dass dem Gebläse in Strömungsrichtung gesehen ein Element mit einer ersten und einer zweiten Kammer vorgeschaltet ist, wobei mindestens der Luftanschluss mit der ersten Kammer und der Gasanschluss sowie der Zufuhranschluss für Luft und Gas des Gasbrenner mit der zweiten Kammer pneumatisch verbunden sind, wobei zwischen den beiden Kammern ein fluiddurchlässiger Verbindungsbereich vorgesehen ist, wobei bei Betrieb des Gerätes einerseits von der Umgebung des Gerätes zur ersten Kammer und andererseits von der ersten zur zweiten Kammer ein Druckgefälle ausgebildet ist (der Umgebungsdruck ist größer als der Druck in der ersten Kammer und der Druck in der ersten Kammer ist größer als der Druck in der zweiten Kammer) und wobei mindestens an der zweiten Kammer ein weiterer Anschluss zur Rückführung von Prozessgasen zum Gasbrenner vorgesehen ist.

Mit anderen Worten ausgedrückt, ist nach der Erfindung ein dem Gasbrenner vorgeschaltetes Gassammelgehäuse oder dergleichen mit zwei Kammern vorgesehen, das dazu dient, die während des Betriebes anfallenden Prozessgase zu sammeln und zur weiteren Nutzung weiter zu verteilen.

Um das zum Gasbrenner beförderte Gas-Luft-Gemisch bezüglich seiner Zusammensetzung genau regeln zu können, ist nach einer bevorzugten Ausführungsform im fluiddurchlässigen Verbindungsbereich ein Element zur Erzeugung eines Druckverlustes, vorzugsweise ein Massenstromsensor, von der ersten zur zweiten Kammer vorgesehen.

Um auch das im Betrieb anfallende Anodenrestgas verwerten zu können, ist nach einer weiteren bevorzugten Ausführungsform vorgesehen, dass der Anschluss der zweiten Kammer anodenausgangsseitig mit der Brennstoffzelle verbunden ist.

Besonders bevorzugt ist ein Prozesswassersammelbehälter vorgesehen, der einen Entlüftungsanschluss aufweist, der mit dem Anschluss der zweiten Kammer verbunden ist. Diese Maßgabe gewährleistet, dass möglicherweise wasserdampfseitig auftretende Leckagegase über das erfindungsgemäße Gehäuse bzw. dessen zweite Kammer dem Gasbrenner zuführbar sind und damit nicht in die Umgebung entweichen können. Dazu sind ferner an den Reformerkomponenten und/oder an der Brennstoffzelle mit dem Prozesswassersammelbehälter in Verbindung stehende Kondensatabscheider für Prozesswasser vorgesehen.

Zur Versorgung der Brennstoffzelle mit sauerstoffreicher Luft ist nach einer weiteren bevorzugten Ausführungsform an der ersten Kammer ein kathodenseitig mit der Brennstoffzelle verbundener Luftabfuhranschluss vorgesehen.

Um während des An- und Abfahrens der Anlage anfallende Gase der Reformerkomponenten optimal zu nutzen, ist zwischen den Reformerkomponenten und der Brennstoffzelle eine Verbindungsleitung vorgesehen, die ein Umschaltventil und eine sich daran anschließende Bypassleitung aufweist, wobei diese mit einem Rückfuhranschluss mit der ersten Kammer verbunden ist.

Schließlich ist vorteilhaft vorgesehen, dass der genannte Rückfuhranschluss nahe dem fluiddurchlässigen Verbindungsbereich in die erste Kammer ausmündet.

Das erfindungsgemäße Gerät einschließlich seiner vorteilhaften Weiterbildungen gemäß der abhängigen Patentansprüche wird nachfolgend anhand der zeichnerischen Darstellung eines bevorzugten Ausführungsbeispiels näher erläutert.

Es zeigt

Figur 1   schematisch einen Gesamtschaltplan des erfindungsgemäßen Gerätes; und

Figur 2   als Schnittdarstellung das Element mit den beiden Kammern zum Sammeln von anfallenden Prozessgasen.

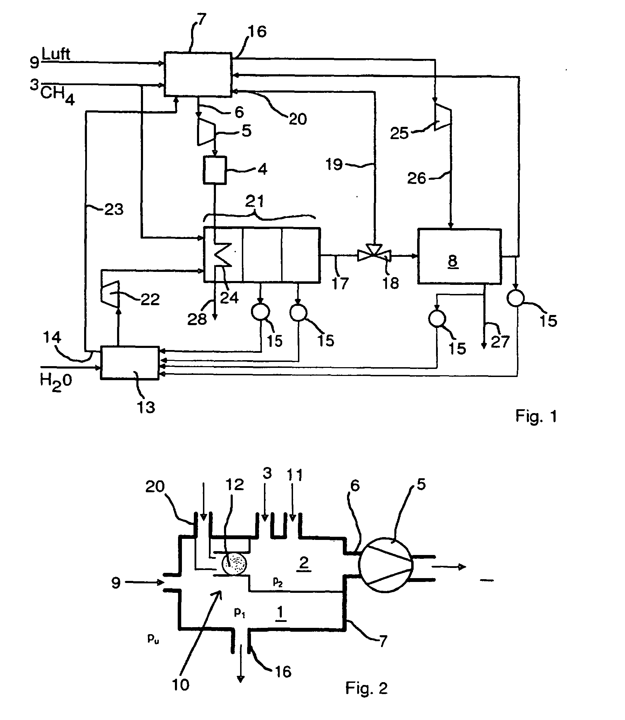

In Figur 1 ist eine grundsätzliche Verschaltung eines Brennstoffzellensystems (BZ) dargestellt. Dieses hat die Aufgabe, aus Luft, Wasser und Erdgas zum einen Heizwärme, zum anderen einen Überschuss an elektrischer Energie herzustellen. Die Heizwärme dient zum Beispiel zur Beheizung eines Wohnhauses, die elektrische Energie dient zum Beispiel zur teilweisen Versorgung eines Wohnhauses mit elektrischem Strom.

Das BZ-System besteht im Wesentlichen aus einem Gaserzeugungssystem (GES), in dem an bestimmten Katalysatoren durch chemische Reaktionen von Erdgas und Wasser ein wasserstoffreiches Gas (sogenanntes Reformat) erzeugt wird, und einer Brennstoffzelle (Brennstoffzellenstack) 8, in der Sauerstoff aus der Umgebungsluft mit dem Wasserstoff aus dem Reformat zu Wärme und elektrischem Strom reagiert.

Die Reaktionsmischung aus Wasser(dampf) und Erdgas, die im GES zu Reformat reagiert, weist einen hohen Anteil an Wasserdampf auf. Während die Gasmischung das System vom GES über die Verbindungsleitung 17, die Brennstoffzelle 8 und den Anschluss 11 durchströmt, werden durch Abkühlung sukzessive Anteile des Wasserdampfes kondensiert und in flüssiges Wasser überführt. Dieses flüssige Wasser (Kondensat) wird von Kondensatabscheider (Kondensatableiter) 15 aus dem Gasstrom abgetrennt und dem Prozesswassersammelbehälter 13 über die dargestellten Leitungen zugeführt. Diese Rückführung von Kondensat ist von Bedeutung, um den Bedarf des Systems an Frischwasser zu minimieren.

Die Förderkomponente 22 saugt das Prozesswasser aus dem Behälter 13 an und fördert es in das GES 21. Im Behälter 13 vermischen sich die Kondensate aus den dargestellten Leitungen mit dem Frischwasser. Die Frischwasserzufuhr wird füllstandsabhängig geregelt, so dass die Förderkomponente jederzeit Wasser ansaugen kann. Neben der dargestellten Zulaufleitungen und den überigen Kondensatsammelleitungen weist der Behälter 13 noch die Saugleitung der Förderkomponente 22 und die Entlüftungsleitung 23 auf. Die Entlüftungsleitung 23 dient dazu, den Druck im Behälter 13 auszugleichen, so dass füllstandsunabhängig immer ein konstanter Druck im Behälter herrscht. Eine weitere Funktion der Entlüftungsleitung wird weiter unten erläutert.

Das Umschaltventil 18 für das Reformat dient zur zustandsabhängigen Schaltung des Gasstroms, so dass zum Beispiel während des Aufheizens oder Herunterfahrens des Systems der Stack umgangen werden kann. Während bestimmter Betriebszustände kann die Gaszusammensetzung unter Umständen nicht den Anforderungen des Stacks genügen, so dass die erwähnte Bypass-Schaltung sinnvoll ist. Die Leitungen 17 und 19 können je nach Betriebszustand Reformat, Wasserdampf oder Luft (feucht oder trocken) enthalten. Der Stack sollte aber nur von Reformat durchströmt werden.

Die Reformierungs-Reaktion ist stark endotherm, d. h. damit die Reaktion abläuft, muss der Reformer-Katalysator auf einem Temperaturniveau von 600 - 800 °C beheizt werden. Diese Beheizung findet mit dem heißen Brennerabgas im Wärmetauscher 24 statt. Im Brenner 4 wird Erdgas oder Mischungen aus Erdgas und Anodenrestgas (das Anodenrestgas ist Reformat, das durch die Reaktion im Stack wasserstoffabgereichert ist), bzw. während des Abfahrvorgangs Wasserdampf-Reformat-Gemische aus der Bypassleitung 19 (Rückfuhranschluss 20), mit Luftsauerstoff verbrannt, wobei Wärme entsteht. Nachdem das Brenner-Abgas im Wärmetauscher 24 einen Teil seiner Wärmeenergie an den Reformer-Katalysator abgegeben hat, verlässt das nun abgekühlte Brennerabgas das GES.

Die Luftversorgung des Stacks wird mit der Förderkomponente 25 realisiert (z. B. ein Radialgebläse). Diese saugt Luft über eine Leitung 26 aus der Ansaugbox (Element 7) in den Stack, wo die sauerstoffverbrauchende Brennstoffzellenreaktion abläuft. Die sauerstoffabgereicherte Kathoden-Abluft verlässt den Stack über die mit dem Bezugszeichen 27 gekennzeichnete Leitung.

Für diese Erfindung sind neben der Ansaug-Box die Komponenten Prozesswassersammelbehälter 13, Umschaltventil 18, Kondensatableiter 15 und die Kondensatleitungen von besonderer Bedeutung.

Einige Komponenten des BZ-Systems werden von Reformat durchströmt. Besteht bei diesen Komponenten die Möglichkeit, dass Reformat aus diesen Komponenten hinaus in die Umgebung der Komponenten entweichen kann, wäre eine Gefährdung aufgrund der Bildung zündfähiger Erdgas-/Wasserstoff-Luft-Gemische gegeben. Weiterhin liegen innerhalb des GES giftige Konzentrationen an Kohlenmonoxid (CO) vor.

Die Möglichkeit, dass oben erwähnte Komponenten intern undicht bezüglich Reformat werden können, d. h. dass die Komponenten nicht mehr dicht schließen, ist gegeben durch die Tatsache, dass technisch bekannte/bewährte und kostengünstige Komponenten zum Teil nicht für die in BZ-Systemen herrschenden Bedingungen geeignet sind (Dichtigkeit bei Wasserstoffbeaufschlagung, Funktion bei kondensierenden Bedingungen). Typischerweise sind es industriell eingesetzte Komponenten, die den Anforderungen gerecht werden, doch diese sind zu teuer und/oder zu groß für den Einsatz in einem BZ-Heizgerät.

Insbesondere trifft das auf in der Heizungstechnik zum Einsatz kommende Ventile zu, die zwar für den Einsatz mit Erdgas zugelassen sind (zum Beispiel DIN EN 161), aber die erforderlichen Dichtigkeiten nicht unbedingt mit Wasserstoff erreichen.

Eine weitere Problematik betrifft die Kondensatableiter, die konstruktionsbedingt gewisse Leckraten bezüglich des gasförmigen Mediums aufweisen (siehe unten).

Weiterhin stellt der BZ-Stack mit seinen empfindlichen, dünnen PEM-Membranen ein potentielles Leckagerisiko dar, wenn die Membranen durch ungünstige Betriebsbedingungen (Temperatur, Feuchte) beschädigt werden. Es kann grundsätzlich nicht immer sichergestellt werden, dass solche ungünstigen Betriebsbedingungen vermieden werden können.

Die Erfindung nutzt die Tatsache aus, dass im System Luftförderkomponenten 5, 25 enthalten sind, die während des Systembetriebs permanent Luft ansaugen, um bestimmte Systemkomponenten mit Luft zu versorgen (Brenner, Stack). Beide Förderkomponenten saugen die Luft aus der Ansaugbox heraus an. Wenn gewährleistet ist, dass sämtliche möglichen internen Gasleckagen ausschließlich in die Ansaugbox strömen, ist sichergestellt, dass die Leckageströme die Ansaugbox nicht mehr über Anschluss 9 verlassen können, sondern von den Luftförderkomponenten angesaugt werden und nur noch bevorzugt über die Abgasleitung 28 nach Umsatz im Gasbrenner 5 das System verlassen können.

Wird ein Leckstrom (der brennbare Gase enthält) vom Brennergebläse 5 über die Ansaugbox angesaugt, so wird das darin enthaltene brennbare Gas im Gasbrenner gefahrlos verbrannt (sehr hohe Flammentemperaturen, Sauerstoffüberschuss). Solange der Leckstrom eine bestimmte Menge nicht überschreitet, reicht der Sauerstoffüberschuss im Brennergas aus, um die brennbaren Bestandteile vollständig zu verbrennen, ohne dass die Verbrennungshygiene dadurch negativ beeinflusst wird.

Ein Leck in einer der Stack-Membranen führt zu einem Luft-, bzw. Sauerstoffübertritt von der Kathode auf die Anode, wenn der im Kathodenraum herrschende Druck über dem im Anodenraum herrschenden Druck liegt (dies kann konstruktiv sichergestellt werden). In diesem Fall würde ein Teil des Luftsauerstoffs an der Katalysatoroberfläche des Anodenraums sofort mit Wasserstoff zu Wasser reagieren und keine weitere Gefahr mehr darstellen. Sollte ein anderer Teil des Luftsauerstoffs die Anode verlassen, würde das Wasserstoff-Sauerstoff-Gemisch durch die Ansaugbox-Konstruktion vom Brennergebläse 5 angesaugt und im Brenner gefahrlos verbrannt werden; es kann somit kein brennbares Gas in die Umgebung des Gerätes gelangen.

Wird ein Leckstrom vom Kathodengebläse 25 über die Leitung 26 am Luftabfuhranschluss 16 der Ansaugbox angesaugt, so besteht im Falle von Wasserstoff eine hohe Wahrscheinlichkeit dafür, dass der Wasserstoff mit dem Luftsauerstoff an der Katalysatoroberfläche zu Wasser oxidiert wird (der BZ-Katalysator unterstützt genau diese Reaktion sehr effektiv). Wenn durch diese Reaktion in der Brennstoffzelle 8 der Wasserstoff nicht vollständig umgesetzt wird, so wird der Wasserstoff zumindest durch die im Verhältnis sehr große Luftmenge (ein Leck kann maximal nur einen verhältnismäßig geringen Volumenstrom bedeuten) stark verdünnt, und mit der Kathoden-Abluft 27 üblicherweise in eine Abgasleitung befördert, so dass hiervon keine Gefahr ausgeht.

Eine weitere Möglichkeit für Gaslecks besteht in den Kondensatableitern 15. Diese Bauteile besitzen üblicherweise einen Schwimmer, der bei steigender Kondensatmenge bzw. -höhe im Kondensatableiter einen Ventilsitz freigibt (Schwimmer wird bei steigendem Kondensatniveau durch Auftriebskraft angehoben), wodurch das Kondensat durch das Ventil aus dem Ableiter abfließen kann. Sobald das Kondensatniveau wieder ausreichend weit abgesunken ist, verschließt der Schwimmer das Ventil wieder. Die Schließkräfte des Ventils werden meist durch die Auftriebs-/Gewichtskraft des Schwimmers und durch die Druckdifferenz zwischen Anlage (zum Beispiel innerhalb des GES) und Kondensatleitung bestimmt. Aufgrund der bei BZ-Niederdrucksystemen nur sehr geringen Druckdifferenz (wenige mbar) können die Schließkräfte sehr niedrig sein, mit der Folge gewisser Leckraten hinsichtlich des gasförmigen Mediums.

Die Kondensatleitungen der Ableiter führen alle in den Prozesswasser-Vorratsbehälter 13, der gegen die Umgebung abgedichtet und lediglich über die Entlüftungsleitung 23 mit der Ansaugbox verbunden ist. Sollte es nun zu einem Gasleck in den Kondensatableitern kommen, gelangt das Gas zuerst in den Behälter 13. Diesen kann das Gas nur über die Entlüftungsleitung 23 verlassen, da alle anderen Anschlüsse durch Wassersäulen gegen Gaseintritt gesperrt sind. Da die Leitung 23 ebenfalls an die Ansaugbox angeschlossen ist, würde ein durch diese Leitung strömendes Gas vom Brennergebläse 5 angesaugt und im Brenner verbrannt werden.

Die Ansaugbox ist in Figur 2 im Querschnitt dargestellt. Zweck der Ansaugbox ist es, eindringende brennbare und/oder giftige Gase sicher den Luftförderkomponenten von Brenner 4 und Stack 8 zuzuführen, und ein Ausströmen dieser Gase in die Umgebung der Ansaugbox sicher zu verhindern.

Ferner ist es Zweck der Ansaugbox, jede mögliche interne Leckage von Komponenten des BZ-Systems sicher zu beherrschen und dadurch Gefährdungen durch interne Leckagen auszuschliessen. Erfindungsgemäß ist der Aufwand dafür sehr gering.

Dieser Zweck wird durch eine sinnvolle Unterteilung des Elements 7 in zwei Bereiche (äußerer Bereich: erste Kammer 1, innerer Bereich: zweite Kammer 2) erreicht. Alle brennbaren Gase (Anodenrestgas, Erdgas und Entlüftung des Prozesswasser-Vorratsbehälters) münden in das innere Gehäuse (zweite Kammer 2). Alle Luftströme/Luftanschlüsse (Verbrennungsluft, Ansaugluft des Kathodengebläses und Eintritt der Heizluft) münden dagegen in das äußere Gehäuse (erste Kammer 1). Es ist von Bedeutung, dass alle Luftströme durch den Verbindungsbereich 10 hindurchströmen, da dieser zum Beispiel ein Massenstromsensor für die Verbrennungsluft enthalten kann, mit dem eine bestimmte Brennerregelung realisiert wird.

Entscheidend für die Funktion der Box sind die Druckverluste, die sich bei Durchströmung der Stutzen 20, 9 und 16 bzw. bei der Durchströmung des Druckverlust-Elements 10 ergeben. Durch geeignete Auslegung der Querschnitte der genannten Stutzen/Öffnungen kann erreicht werden, dass sich die Drücke $p_2$ (Druck in zweiter Kammer), $p_1$ (Druck in erster Kammer) und $p_u$ (Umgebungsdruck) in jedem Betriebspunkt folgendermaßen einstellen:

$$p_2 \; < \; p_1 \; < \; p_u$$

Wenn diese Bedingung eingehalten wird, ist sichergestellt, dass kein Gasstrom aus der zweiten Kammer 2 in die erste Kammer 1 oder in die Umgebung des Gehäuses 7 strömen kann, da die Strömungsrichtung von Gasen ausschließlich in Richtung fallenden Drucks liegt. Da alle Leitungen, über die brennbares/giftiges Gas strömen können, ausschließlich in die zweite Kammer 2 münden, können diese kritischen Gase also nur zu den Luftförderkomponenten 5 und 25 gelangen.

Eine Besonderheit gilt für den Rückfuhranschluss 20, über den die Heizluft der Ansaugbox zugeführt wird. Dieser Stutzen wird innerhalb des äußeren Gehäuses der Ansaugbox als Rohr weitergeführt und dieses Rohr endet koaxial innerhalb des Ansaugstutzens des inneren Gehäuses (der zweiten Kammer 2), wobei aber noch ein ausreichend großer Querschnitt des Ansaugstutzens des inneren Gehäuses frei bleibt, um mit dem Gebläse 5 Verbrennungsluft sowohl aus dem Rückfuhranschluss 20 als auch aus dem übrigen Volumen des äußeren Gehäuses der Ansaug-Box anzusaugen. Hierdurch wird sichergestellt, dass Gas, welches aus Stutzen 20 austritt, immer von Gebläse 5 angesaugt wird, solange dieses Gebläse in Betrieb ist.

Es gibt verschiedene Publikationen zur Problematik der Beherrschung von Gaslecks in BZ-Systemen (z. B. US 6,787,263 B). Diese haben meist zum Ziel, innerhalb des Gehäuses von BZ-Systemen einen Unterdruck gegenüber der Umgebung des Gehäuses zu erzeugen, wodurch ein Ausströmen von gefährlichen Gasen in die Umgebung des Systems verhindert werden soll. Um innerhalb des Gehäuses einen Unterdruck zu erzeugen, ist dann in jedem Fall eine sehr gute Abdichtung des gesamten Gehäuses gegen die Umgebung notwendig. Diese dichte Gestaltung des Gehäuses zieht hohen Aufwand, hohe Kosten und Fehleranfälligkeit bei der späteren Wartung des Systems nach sich.

Bei der vorgestellten Erfindung dagegen ist es lediglich notwendig, die relativ kleine Ansaugbox innerhalb des Gerätegehäuses "dicht" zu gestalten. Die Dichtigkeit des Gerätegehäuses hat keine Bedeutung für die Funktion der Erfindung. Ausserdem muss die Ansaug-Box nicht zu Wartungsarbeiten geöffnet werden, da sie praktisch keine wartungsintensiven Bauteile enthält (Ausnahme: Luft-Massenstromsensor. Dieser hat allerdings eine sehr hohe Lebensdauer von meist > 10000 h).

Ein weiterer Vorteil ergibt sich aus der einfachen Integration eines Massenstromsensors 12 in den Verbrennungsluftweg (Öffnung zwischen ersten und zweiten Kammer der Ansaugbox), wodurch eine leistungsfähige Verbrennungsregelung ermöglicht wird.

Schließlich ist für eine weitere bevorzugte, nicht extra dargestellte Ausführungsform vorgesehen, dass die zweite Kammer 2 einen ersten und einen zweiten Kammerbereich aufweist, zwischen denen eine einen Druckverlust erzeugende Blende angeordnet ist, wobei der erste Kammerbereich einen Anschlussstutzen für vorgewärmte Luft und der zweite Kammerbereich den Anschluss 11 zur Rückführung von Prozessgasen und den Zufuhranschluss 6 für Luft und Gas zum Gasbrenner 4 aufweist. Ergänzend zur vorerläuterten Ausführungsform ist hiernach die zweite Kammer 2 also nochmals unterteilt ausgebildet, wobei der Druck wegen der vorgesehenen Blende im ersten Kammerbereich höher als im zweiten Kammerbereich ist. Diese Lösung ist insofern vorteilhaft, weil mit ihr auch noch die Temperatur der dem Gasbrenner 4 zugeführten Luft über das Verhältnis vorgewärmte/nicht vorgewärmte Luft nach Bedarf eingestellt werden kann.

**Bezugszeichenliste**

| 1 | erste Kammer |
|---|---|
| 2 | zweite Kammer |
| 3 | Gasanschluss |
| 4 | Gasbrenner |
| 5 | Gebläse |
| 6 | Zufuhranschluss |
| 7 | Element (Gehäuse, Ansaugbox, Gassammelgehäuse) |
| 8 | Brennstoffzelle |
| 9 | Luftanschluss |
| 10 | Verbindungsbereich |
| 11 | Anschluss |
| 12 | Massenstromsensor |
| 13 | Prozesswassersammelbehälter |
| 14 | Entlüftungsanschluss |
| 15 | Kondensatabscheider |
| 16 | Luftabfuhranschluss |
| 17 | Verbindungsleitung |
| 18 | Umschaltventil |
| 19 | Bypassleitung |
| 20 | Rückfuhranschluss |
| 21 | Gaseerzeugungssystem |
| 22 | Förderkomponente |
| 23 | Entlüftungsleitung |
| 24 | Wärmetauscher |
| 25 | Förderkomponente |
| 26 | Luftleitung |
| 27 | Kathodenabluftleitung |
| 28 | Abgasleitung |
| | |
| $p_1$ | Druck in erster Kammer |
| $p_2$ | Druck in zweiter Kammer |
| $p_u$ | Umgebungsdruck |

## Patentansprüche

1.  Gerät zur Bereitstellung thermischer und elektrischer Energie, umfassend Reformerkomponenten zur Umwandlung von Kohlenwasserstoffgas in Wasserstoff und weitere Reformer-Produkte und mindestes eine Brennstoffzelle (8) zur Umwandlung von Luft und des bereitgestellten Wasserstoffs in elektrische Energie, wobei die Reformerkomponenten einen Luftanschluss (9), einen Gasanschluss (3) und einen Gasbrenner (4) umfassen und wobei der Gasbrenner (4) ein Gebläse (5) mit einem Zufuhranschluss (6) für Luft und Gas aufweist,
    **dadurch gekennzeichnet,**
    **dass** dem Gebläse (5) in Strömungsrichtung gesehen ein Element (7) mit einer ersten (1) und einer zweiten Kammer (2) vorgeschaltet ist,
    wobei mindestens der Luftanschluss (9) mit der ersten Kammer (1) und der Gasanschluss (3) sowie der Zufuhranschluss (6) für Luft und Gas des Gasbrenner (4) mit der zweiten Kammer (2) pneumatisch verbunden sind,
    wobei zwischen den beiden Kammern (1, 2) ein fluiddurchlässiger Verbindungsbereich (10) vorgesehen ist,
    wobei bei Betrieb des Gerätes einerseits von der Umgebung des Gerätes zur ersten Kammer (1) und andererseits von der ersten (1) zur zweiten Kammer (2) ein Druckgefälle ausgebildet ist, und
    wobei mindestens an der zweiten Kammer (2) ein weiterer Anschluss (11) zur Rückführung von Prozessgasen zum Gasbrenner (4) vorgesehen ist.

2.  Gerät nach Anspruch 1,
    **dadurch gekennzeichnet,**
    **dass** im fluiddurchlässigen Verbindungsbereich (10) ein Element zur Erzeugung eines Druckverlustes, vorzugsweise ein Massenstromsensor (12), von der ersten (1) zur zweiten Kammer (2) vorgesehen ist.

3.  Gerät nach Anspruch 1 oder 2,
    **dadurch gekennzeichnet,**
    **dass** der Anschluss (11) der zweiten Kammer (2) anodenausgangsseitig mit der Brennstoffzelle (8) verbunden ist.

4.  Gerät nach einem der Ansprüche 1 bis 3,
    **dadurch gekennzeichnet,**
    **dass** zur Bereitstellung von Wasserdampf ein Prozesswassersammelbehälter (13) vorgesehen ist, der einen Entlüftungsanschluss (14) aufweist, der mit dem Anschluss (11) der zweiten Kammer (2) verbunden ist.

5.  Gerät nach Anspruch 4,
    **dadurch gekennzeichnet,**
    **dass** an den Reformerkomponenten und/oder an der Brennstoffzelle (8) mit dem Prozesswassersammelbehälter (13) in Verbindung stehende Kondensatabscheider (15) für Prozesswasser vorgesehen sind.

6.  Gerät nach einem der Ansprüche 1 bis 5,
    **dadurch gekennzeichnet,**
    **dass** an der ersten Kammer (1) ein kathodenseitig mit der Brennstoffzelle (8) verbundener Luftabfuhranschluss (16) vorgesehen ist.

7.  Gerät nach einem der Ansprüche 1 bis 6,
    **dadurch gekennzeichnet,**
    **dass** zwischen den Reformerkomponenten und der Brennstoffzelle (8) eine Verbindungsleitung (17) vorgesehen ist, die ein Umschaltventil (18) und eine sich daran anschließende Bypassleitung (19) aufweist, wobei diese mit einem Rückfuhranschluss (20) mit der ersten Kammer (1) verbunden ist.

8.  Gerät nach Anspruch 7,
    **dadurch gekennzeichnet,**
    **dass** der Rückfuhranschluss (20) nahe dem fluiddurchlässigen Verbindungsbereich (10) in die erste Kammer (1) ausmündet.

9.  Gerät nach einem der Ansprüche 1 bis 8,
    **dadurch gekennzeichnet,**
    **dass** die zweite Kammer (2) einen ersten und einen zweiten Kammerbereich aufweist, zwischen denen eine einen Druckverlust erzeugende Blende angeordnet ist, wobei der erste Kammerbereich einen Anschlussstutzen für vorgewärmte Luft und der zweite Kammerbereich den Anschluss (11) zur Rückführung von Prozessgasen und den Zufuhranschluss (6) für Luft und Gas zum Gasbrenner (4) aufweist.

## Claims

1.  A device for the supply of thermal and electrical energy, comprising reformer components for converting hydrocarbon gas to hydrogen and further reformer products, and at least one fuel cell (8) for converting air and the hydrogen supplied to electrical energy,
    wherein the reformer components comprise an air connection (9), a gas connection (3) and a gas burner (4), and wherein the gas burner (4) has a fan (5) with a feed connection (6) or air and gas,
    **characterised in that**
    an element (7) with a first (1) and a second chamber (2) is connected downstream of the fan (5), viewed in the direction of flow,
    wherein at least the air connection (9) is connected to the first chamber (1) and the gas connection (3), as well as the feed connection (6) for air and gas of the gas burner (4), are connected pneumatically to the second chamber (2),

wherein a fluid permeable connection region (10) is provided between the two chambers (1, 2),

wherein a pressure gradient is formed during operation of the device on the one hand from the area surrounding the device to the first chamber (1), and on the other hand from the first (1) to the second chamber (2), and

wherein one further connection (11) is provided at least on the second chamber (2) for returning process gases to the gas burner (4).

2. The device according to Claim 1,
**characterised in that**
an element is provided in the fluid permeable connection region (10) for generating a pressure loss, preferably a mass flow sensor (12), from the first (1) to the second chamber (2).

3. The device according to Claim 1 or 2,
**characterised in that**
the connection (11) of the second chamber (2) is connected on the anode output side to the fuel cell (8).

4. The device according to one of Claims 1 to 3,
**characterised in that**
a process water collection tank (13) is provided for supplying water vapour, which tank has a bleed connection (14) which is connected to the connection (11) of the second chamber (2).

5. The device according to Claim 4,
**characterised in that**
condensate separators (15) connected to the process water collection tank (13) are provided for process water on the reformer components and/or on the fuel cell (8).

6. The device according to Claims 1 to 5,
**characterised in that**
an air discharge connection (16) connected to the fuel cell (8) on the cathode side is provided on the first chamber (1).

7. The device according to one of Claims 1 to 6,
**characterised in that**
a connecting pipe (17) which has a switching valve (18) and a bypass pipe (19) connecting to it, is provided between the reformer components and the fuel cell (8), wherein this bypass pipe is connected with a return connection (20) to the first chamber (1).

8. The device according to Claim 7,
**characterised in that**
the return connection (20) opens into the first chamber (1) close to the fluid permeable connection region (10).

9. The device according to one of Claims 1 to 8,
**characterised in that**
the second chamber (2) has a first and a second chamber region between which is arranged a diaphragm generating a pressure loss, wherein the first chamber region has a connection socket for preheated air and the second chamber region has the connection (11) for returning process gases and the feed connection (6) for feeding air and gas to the gas burner (4).

**Revendications**

1. Appareil de fourniture d'énergie thermique et électrique, comprenant des composants de réformage po transformer du gaz hydrocarbure en hydrogène et d'autres produits de réformage et au moins une cellule de combustible (8) pour transformer l'air et l'hydrogène produit en énergie électrique, les composants de réformage comportant un raccordement d'air (9), un raccordement de gaz (3) et un brûleur à gaz (4) et le brûleur à gaz (4) comportant une soufflerie (5) avec un raccordement d'acheminement (6) pour l'air et le gaz,
**caractérisé en ce que,**
en amont de la soufflerie (5), vu dans le sens de flux, est installé un élément (7) comprenant une première (1) et une deuxième chambre (2),
au moins le raccordement d'air (9) étant relié pneumatiquement à la première chambre (1) et le raccordement de gaz (3) de même que le raccordement d'acheminement (6) pour l'air et le gaz du brûleur à gaz (4) étant reliés pneumatiquement à la deuxième chambre (2),
tandis qu'il est prévu entre les deux chambres (1, 2) une zone de liaison perméable aux fluides (10),
une chute de tension étant créée lors du fonctionnement de l'appareil d'une part de l'environnement de l'appareil à la première chambe (1) et d'autre part de la première (1) à la deuxième chambre (2) et un autre raccordement (11) pour recycler les gaz de traitement vers le brûleur à gaz (4) étant prévu au moins sur la deuxième chambre (2).

2. Appareil selon la revendication 1,
**caractérisé en ce que,**
dans la zone de liaison perméable au fluide (10), il est prévu un élément de création d'une perte de pression, de préférence un capteur de débit massique (12), de la première (1) à la deuxième chambre (2).

3. Appareil selon la revendication 1 ou 2,
**caractérisé en ce que**
le raccordement (11) de la deuxième chambre (2) est relié du côté de la sortie anodique à la cellule de combustible (8).

**4.** Appareil selon une des revendications 1 à 3, **caractérisé en ce que,** pour fournir de la vapeur d'eau, il est prévu une cuve collectrice d'eau de traitement (13) comportant un raccordement de purge d'air (14) qui est relié au raccordement (11) de la deuxième chambre (2).

**5.** Appareil selon la revendication 4, **caractérisé en ce que** il est prévu sur les composants de réformage et/ou la cellule de combustible (8) des séparateurs de condensation en liaison avec la cuve collectrice d'eau de traitement (13) pour l'eau de traitement.

**6.** Appareil selon une des revendications 1 à 5, **caractérisé en ce que** il est prévu sur la première chambre (1) un raccordement d'évacuation d'air (16) relié du côté cathodique à la cellule de combustible (8).

**7.** Appareil selon une des revendications 1 à 6, **caractérisé en ce que,** entre les composants de réformage et la cellule de combustible (8), il est prévu une conduite de liaison (17) qui comporte une vanne de transfert (18) et une conduite de dérivation (19) s'y raccordant, celle-ci étant reliée par un raccordement de recyclage (20) à la première chambre (1).

**8.** Appareil selon la revendication 7, **caractérisé en ce que** le raccordement de recyclage (20) débouche près de la zone de liaison perméable au fluide (10) dans la première chambre (1).

**9.** Appareil selon une des revendications 1 à 8, **caractérisé en ce que** la deuxième chambre (2) comporte une première et une deuxième zone de chambre entre lesquelles est disposé un écran générant une perte de pression, la première zone de chambre comportant une tubulure de raccordement pour l'air préchauffé et la deuxième zone de chambre comportant le raccordement (11) pour le recyclage des gaz de traitement et le raccordement d'acheminement (6) vers le brûleur à gaz (4) pour l'air et le gaz.

EP 1 739 779 B1

Fig. 1

Fig. 2

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 10160463 A1

- US 6787263 B